# EUROPÄISCHE PATENTSCHRIFT

(11) **EP 2 067 716 B1**
(45) Veröffentlichungstag und Bekanntmachung des Hinweises auf die Patenterteilung: **19.02.2014**
(21) Anmeldenummer: 08170859.6
(22) Anmeldetag: 05.12.2008
(51) Int. Cl.: B44D 3/00, B44D 3/08, B65D 77/06, F16K 21/16

(54) **Vorrichtung zum Dosieren flüssiger Medien und Behältersystem**
Method of dosing liquid media and container system
Dispositif destiné au dosage de milieux liquides et système de récipient

(30) Priorität: 05.12.2007 DE 102007058844; 11.06.2008 EP 08158072
(43) Veröffentlichungstag der Anmeldung: 10.06.2009
(73) Patentinhaber: Schlitt, Uwe Michael, 64295 Darmstadt (DE)
(72) Erfinder: Schlitt, Uwe, 64295 Darmstadt (DE)
(74) Vertreter: Reitstötter - Kinzebach

(56) Entgegenhaltungen:
- EP-A- 0 162 727
- EP-A- 0 284 290
- EP-A- 0 661 220
- EP-A- 1 106 526
- WO-A-96/09218
- GB-A- 2 180 217
- US-B1- 6 347 718

## Beschreibung

Die vorliegende Erfindung betrifft ein Behältersystem, das einen formstabilen Behälter und einen in dem Behälter angeordneten flexiblen Beutel umfasst. Weiterhin betrifft die vorliegende Erfindung eine Vorrichtung zum Dosieren eines flüssigen Mediums, die einen Kreislauf mit einem darin integrierten erfindungsgemäßen Behältersystem und eine Dosierstrecke umfasst und ein Verfahren zum Mischen einer Farbformulierung.

Herkömmliche Dosiervorrichtungen für flüssige Medien weisen in der Regel wenigstens einen Vorratsbehälter auf, der zur Entnahme des Mediums über mechanische oder elektrische Pumpen angesteuert wird. Dabei handelt es sich in der Regel um offene Systeme, in denen die Vorratsbehälter von außen befüllt werden. Die Behälter verfügen dazu beispielsweise über abnehmbare Deckel. Besondere Anforderungen werden an Dosieranlagen für flüssige Medien gestellt, die Feststoffteilchen enthalten oder bei denen potentiell die Möglichkeit besteht, dass sich in ihnen Feststoffteilchen ausbilden. Dazu zählen z. B. Suspensionen, d. h. Dispersionen von unlöslichen Feststoffteilchen in Flüssigkeiten, aber auch teilerstarrte Schmelzen oder flüssige Medien mit Feststoffteilchen, die durch Auskristallisation eines in der Flüssigkeit ursprünglich gelösten Feststoffs resultieren. Die Dosieranlagen für solche Medien weisen z. B. Behälter auf, die ein mechanisches Rührwerk enthalten, um ein Absetzen des Feststoffs zu mindern oder günstigstenfalls zu vermeiden. Mit den an die Behälter angeschlossenen Pumpen werden die Medien in der gewünschten (d. h. zu dosierenden) Menge in einen Vorlagebehälter (Dosiervorlage) gefördert und gegebenenfalls gemeinsam mit anderen Medien zum gewünschten Produkt konfektioniert. Bei den meisten herkömmlichen Anlagen erfolgt die Herstellung einer bestimmten Produktmischung sequenziell aus Einzeldosen, das heißt jede der zur Erzeugung einer bestimmten Produktmischung benötigten Einzelkomponenten wird nacheinander aus dem jeweiligen Behälter zudosiert. Bei diesen Anlagen bilden der Vorratsbehälter und die Dosiervorrichtung baulich eine Einheit.

Die EP 0661220 A1 beschreibt eine Vorrichtung für den Transport und/oder Lagerung von fließfähigen Stoffen mit einem Innenbehälter mit zwei Anschlüssen und einem an dem Innenbehälter anliegenden Außenbehälter mit Entnahmeöffnung, die einen rechteckigen, quadratischen oder runden Grundriss aufweisen.

Die US 6,347,718 B1 beschreibt einen Container mit einer vierseitigen Basis, einer Mulde, die sich über einen Teil der Oberfläche der Basis erstreckt, einer Stutzenhalterung an der Mündung der Mulde, um den Stutzen eines Beutels aufzunehmen, wobei sich die Öffnung zur Entnahme einer Flüssigkeit unterhalb des Niveaus der Oberfläche der Basis befindet.

Die bisherigen Dosiervorrichtungen weisen vielfältige Nachteile auf. So erlauben viele konventionelle Dosiervorrichtungen meist keine simultane, also gleichzeitige Dosierung der Einzelkomponenten. Andere, simultandosierfähige Vorrichtungen sind offene Systeme, bei denen die Vorratsbehälter von außen befüllt werden müssen. Bei offenen Systemen besteht die Gefahr, dass die Medien in den Behältern eindicken, da Flüssigkeit verdunsten kann. Der nicht eindeutig zu quantifizierende Flüssigkeitsverlust wird bei der Dosierung nicht berücksichtigt. Dies führt aufgrund des mit der Zeit zunehmenden Feststoffgehaltes des Mediums dazu, dass die Produkte bei gleicher Dosierung unterschiedliche Zusammensetzungen aufweisen. Im schlimmsten Fall werden die Medien so eingedickt, dass eine Pumpenförderung nicht mehr möglich ist und/oder die Rührwerksmechanik blockiert oder zerstört wird. Dies kann dazu führen, dass die gesamte betroffene Dosiereinheit (Behälter mit Rühreinrichtung, Leitungen, Pumpe) ausgetauscht werden muss.

Der Einsatz von Vorratsbehältern, die direkt mit dem flüssigen Medium befüllt werden, weist weitere Nachteile auf. So kommt es häufig vor, dass bei der Befüllung das Dosiergut neben die Behälter geschüttet wird, die Komponenten in die falschen Behälter gefüllt werden oder die Behälter beim Befüllen überlaufen. Auch in solchen Fällen muss das Behälter-System aufwändig gereinigt oder sogar ersetzt werden.

Weitere Nachteile herkömmlicher Dosiervorrichtungen ergeben sich daraus, dass die Medien in den Dosierventilen häufig eintrocknen und/oder diese verstopfen. Die Dosierventile funktionieren dann nicht zuverlässig, müssen aufwändig gereinigt und zudem häufig ersetzt werden.

Die Aufgabe der vorliegenden Erfindung ist es daher, möglichst viele der zuvor beschrieben Nachteile herkömmlicher Behältersysteme und Dosieranlagen zu vermeiden.

Überraschenderweise wurde nun gefunden, dass sich ein Behältersystem, das einen formstabilen Behälter und einen in dem Behälter angeordneten flexiblen Beutel mit zwei Anschlüssen aufweist, für einen Einsatz in einer Dosiervorrichtung für flüssige Medien eignet. Die Aufgabe wird demgemäß durch eine Dosiervorrichtung gelöst, bei der ein solches Behältersystem zusammen mit einer Fördereinrichtung und entsprechenden Leitungen einen geschlossenen Kreislauf bildet, von dem eine Dosierstrecke abgeht. Das flüssige Medium kann somit in der Vorrichtung, einschließlich des Behältersystems, zirkulieren. In einer speziellen Ausgestaltung weist die Dosiervorrichtung zusätzlich ein neues selbstschließendes, selbstreinigendes Dosierventil auf. In einer weiteren speziellen Ausgestaltung ist das Behältersystem zudem so konstruiert, dass zum Absetzen neigende Medien durch die Zirkulation im Kreislauf ohne Einsatz eines Rührwerks noch besser homogenisiert werden können und/oder eine im Wesentlichen vollständige Entleerung des Beutels ermöglicht wird. Dazu dient eine neue vorteilhafte Ausgestaltung der Geometrie des Behälterbodens. So wird eine Dosiervorrichtung bereitgestellt, bei der die Anreicherung, Phasentrennung, Sedimentation, Kristallisation und Eintrocknung der zu dosierenden Medien nahezu ausgeschlossen ist.

Ein erster Gegenstand der vorliegenden Erfindung ist daher ein Behältersystem, umfassend einen formstabilen Behälter und einen in dem Behälter angeordneten flexiblen Beutel, der zwei Anschlüsse aufweist, die mit zumindest einer Öffnung des Behälters korrespondieren, wobei
- der Behälter eine im Wesentlichen quaderförmige äußere Grundform aufweist,
- die Entnahmeöffnung an einer Stirnseite des Behälters angeordnet ist,
- der Boden des Behälters von den Längsseiten zur Mitte hin geneigt ist, so dass er eine Rinne in Richtung der Entnahmeöffnung bildet, und
- der Boden von der der Entnahmeöffnung gegenüber liegenden Stirnseite zu der Stirnseite mit der Entnahmeöffnung geneigt ist
und die Siegelung des Beutels an die umgebende, starre Behälterform angepasst ist.

Ein weiterer Gegenstand der Erfindung ist eine Vorrichtung zum Dosieren eines flüssigen Mediums, umfassend einen Kreislauf für das flüssige Medium mit einem in den Kreislauf integrierten Behältersystem und einer von dem Kreislauf abgehenden Dosierstrecke, wobei das Behältersystem einen formstabilen Behälter und einen in dem Behälter angeordneten flexiblen Beutel umfasst, der zwei Anschlüsse aufweist, die mit zumindest einer Öffnung des Behälters korrespondieren, wobei
- der Behälter eine im Wesentlichen quaderförmige äußere Grundform aufweist,
- die Entnahmeöffnung an einer Stirnseite des Behälters angeordnet ist,
- der Boden des Behälters von den Längsseiten zur Mitte hin geneigt ist, so dass er eine Rinne in Richtung der Entnahmeöffnung bildet, und
- der Boden von der der Entnahmeöffnung gegenüber liegenden Stirnseite zu der Stirnseite mit der Entnahmeöffnung geneigt ist.

Ein weiterer Gegenstand der Erfindung ist ein Verfahren zum Mischen einer Farbformulierung, bei dem
- ein Farbmuster gewählt wird,
- entsprechend dem gewählten Farbmuster Farbstoffzusammensetzungen über mehrere Vorrichtungen nach einem der Ansprüche 7 bis11 einer Grundformulierung in einem geeigneten Behälter zudosiert werden, und
- diese Farbformulierung anschließend in dem Behälter zu einem fertigen Pro-dukt konfektioniert wird.

Bei den Anschlüssen kann es sich um übliche, dem Fachmann bekannte und kommerziell erhältliche Anschlüsse handeln. Dazu zählen z. B. Hähne, wie beispielsweise Zapfhähne, Deckel, wie beispielsweise IBC-Verschlüsse, Schläuche oder sonstige Konnektierungen. Entnahme und Zuführanschluss sind bevorzugt als sog. ein- oder beidseitig sperrende Kupplungen ausgestaltet, um ein behältersystem- oder anlagenseitiges Austreten der Flüssigmedien beim Trennungs- oder Wechselvorgang zu vermeiden.

In einer bevorzugten Ausführungsform des erfindungsgemäßen Behältersystems ist wenigstens einer der Anschlüsse des Beutels durch die korrespondierende Öffnung des Behälters geführt. In diesem Zusammenhang wird unter einer korrespondierenden Öffnung die Öffnung verstanden, die in ihrer Funktion dem entsprechenden Anschluss des Beutels entspricht, beispielsweise für die Zuführung in das oder die Entnahme aus dem Behältersystem.

In einer weiteren bevorzugten Ausführungsform des erfindungsgemäßen Behältersystems ist wenigstens einer der Anschlüsse des Beutels mit der korrespondierenden Öffnung des Behälters verbunden. Unter verbunden im Sinne der vorliegenden Erfindung wird verstanden, dass eine Verbindung besteht, die den Durchgang eines in dem (Behälter-)System befindlichen Mediums erlaubt. In der Regel handelt es sich hierbei um eine Leitung.

Vorzugsweise ist der Beutel ein kollabierbarer Beutel. Unter einem kollabierbaren Beutel wird im Sinne der vorliegenden Erfindung ein Beutel verstanden, der auch ohne Be- oder Entlüftung zusammengedrückt, gepresst, zusammengelegt, gefaltet, zusammengeklappt oder auf andere Weise kompaktiert werden kann, ohne dass die Innenwände verkleben und/oder die Wandung beschädigt wird. Erfindungsgemäß ist die Siegelung der Beutel an die umgebende, starre Behälterform, insbesondere an die Geometrie des Bodensegmentes so angepasst, dass Totvolumina, insbesondere ein Faltenwurf des Beutels, auf ein geringstes Maß reduziert ist.

Bevorzugt beträgt der Abstand der Anschlüsse des vollständig gefüllten Beutels mindestens 40 %, vorzugsweise mindestens 50 %, des direkten Abstands der am weitesten voneinander entfernten Punkte auf der Wandung des Beutels. Der Abstand zweier Punkte wird hierbei als Länge der gradlinigen Verbindungslinie der beiden Punkte bestimmt. Die Anschlüsse sind speziell so angeordnet, dass in jedem Füllzustand des Beutels eine Durchmischung des Beutelinhalts durch ein Umwälzen des Mediums, z. B. im Kreislauf einer Dosiervorrichtung, erreicht wird.

In einer weiteren bevorzugten Ausführungsform des erfindungsgemäßen Behältersystems weist der Behälter im unteren Bereich eine Entnahmeöffnung auf, die mit dem ersten Anschluss des Beutels gekoppelt ist. Der zweite Anschluss des Beutels ist über eine Verbindungsleitung mit einer Zuführöffnung des Behälters verbunden, wobei der zweite Anschluss des in dem Behälter befindlichen Beutels zumindest bei vollständiger Befüllung des Beutels oberhalb der Entnahmeöffnung des Behälters liegt.

In einer bevorzugten Ausführungsform des erfindungsgemäßen Behältersystems weist der Behälter eine im unteren Bereich des Behälters angeordnete Entnahmeöffnung, gegebenenfalls eine Verbindung von der Entnahmeöffnung zu einem ersten Anschluss im Beutel (im Folgenden auch als Entnahmeanschluss bezeichnet), eine Zuführöffnung sowie gegebenenfalls eine Verbindung von der Zuführöffnung zu einem zweiten Anschluss im Beutel (im Folgenden auch als Zuführanschluss bezeichnet) auf.

Alternativ zu einer Verbindung von der Entnahmeöffnung zu dem Entnahmeanschluss kann der Entnahmeanschluss auch durch die Entnahmeöffnung geführt sein. Ebenfalls alternativ zu einer Verbindung von der Zuführöffnung zu dem Zuführanschluss kann der Zuführanschluss durch die Zuführöffnung geführt sein.

Vorzugsweise liegt der Zuführanschluss des in dem Behälter befindlichen Beutels zumindest bei vollständiger Befüllung oberhalb der Entnahmeöffnung des Behälters.

In einer besonders bevorzugten Ausführungsform des erfindungsgemäßen Behältersystems weist der Behälter eine im unteren Bereich des Behälters angeordnete Entnahmeöffnung, eine Zuführöffnung und eine Verbindung von der Zuführöffnung zu einem oberen Anschluss im Beutel (Zuführanschluss), der zumindest bei vollständiger Befüllung oberhalb der Entnahmeöffnung liegt, auf. Hierbei wird der erste Anschluss im Beutel (Entnahmeanschluss) durch die Entnahmeöffnung des Behälters geführt. Auf diese Weise kann der Beutel gegebenenfalls im unteren Bereich des Behälters fixiert werden.

In der erfindungsgemäßen Ausgestaltung ist der Behälterboden so konstruiert, das sich entsprechend dem Absetztrichterprinzip Partikel bevorzugt im Entnahmebereich des Beutels absetzen. Sie werden dementsprechend vorrangig aus dem Beutel ausgetragen und können sich nicht dauerhaft im Beutel einlagern. Zudem werden bei dieser Ausführung etwaig abgesetzte Feststoffe durch eine Zirkulation des flüssigen Mediums, z. B. im Kreislauf einer erfindungsgemäßen Dosiervorrichtung (wie im Folgenden beschrieben), redispergiert.

Besonders sind die Entnahmeöffnung und die Zuführöffnung an derselben Stirnseite des Behälters angeordnet. Diese Ausgestaltung erweist sich als besonders vorteilhaft, wenn mehrere Behälter gestapelt werden, insbesondere bei einer modularen Bauweise.

Gemäß einer vorteilhaften Ausführungsform weist das erfindungsgemäße Behältersystem eine Verbindungsleitung von der Zuführöffnung des Behälters zum Zuführanschluss im Beutel auf, die ganz oder teilweise flexibel ausgeführt. Der flexible Teil der Verbindungsleitung ist vorzugsweise aus einem geeigneten Kunststoff, wie beispielsweise aus Weich-PVC oder Silikon, gefertigt. Der flexible Teil der Verbindungsleitung kann auch durch einen Gewebeschlauch gebildet werden.

Gemäß einer vorteilhaften Ausgestaltung des erfindungsgemäßen Behältersystems wird die Verbindungsleitung von der Zuführöffnung unter dem geneigten Boden des Behälters und anschließend hinter dem Beutel zum Zuführanschluss im oberen Bereich des Beutels geführt. In dieser Ausgestaltung kann bei einem Austausch des Beutels auf ein Auswechseln der Verbindungsleitung verzichtet werden, so dass lediglich die Anschlüsse des alten Beutels gelöst, der Beutel getauscht und die Anschlüsse des neuen Beutels wieder konnektiert werden müssen.

Gemäß einer speziellen Ausgestaltung wird die flexible Verbindungsleitung von einer geeigneten Haltevorrichtung im hinteren Teil des Behälters und damit hinter dem Beutel fixiert.

Gemäß einer alternativen Ausgestaltung ist die Verbindungsleitung im Inneren des Behälters bis in den oberen Teil des Behälters starr und von dort bis zum Zuführanschluss des Beutels flexibel ausgestaltet.

Ein weiterer Gegenstand der vorliegenden Erfindung ist eine Vorrichtung zum Dosieren eines flüssigen Mediums, umfassend einen Kreislauf für das flüssige Medium mit einem in den Kreislauf integrierten, erfindungsgemäßen Behältersystem und einer von dem Kreislauf abgehenden Dosierstrecke, wie zuvor definiert.

Unter einem flüssigen Medium wird im Rahmen der vorliegenden Erfindung nicht nur eine einphasige Flüssigkeit verstanden, sondern auch Emulsionen (zwei- und mehrphasige Flüssigkeiten) und flüssige Medien, die Feststoffteilchen enthalten oder bei denen potentiell die Möglichkeit besteht, dass sich in ihnen Feststoffteilchen ausbilden. Dazu zählen z. B. Suspensionen, d. h. Dispersionen von unlöslichen Feststoffteilchen in Flüssigkeiten, aber auch teilerstarrte Schmelzen oder flüssige Medien mit Feststoffteilchen, die aus dem Auskristallisieren eines in der Flüssigkeit ursprünglich gelösten Feststoffs resultieren. Die Viskosität der flüssigen Medien kann in einem weiten Bereich variieren, der von leichtflüssig bis zähflüssig (pastös) reicht.

Bei dem Behältersystem handelt es sich um eine geschlossene Einheit, die bereits befüllt in den Kreislauf eingesetzt werden kann. Das Behältersystem kommt vorteilhafterweise ohne zusätzliche mechanische Rührvorrichtung aus, da die Durchmischung über den Kreislauf erfolgt. Das Behältersystem ist in ein im Wesentlichen geschlossenes System integriert. Das flüssige Medium kann in Intervallen oder ständig umgewälzt werden, so dass eine Entmischung des flüssigen Mediums oder ein Absetzen von Feststoffen vermieden oder zumindest stark vermindert werden kann. Das Behältersystem kann als Ein- oder Mehrweg-Wechselsystem konstruiert sein. Es kann modular an den Kreislauf angeschlossen werden. So ist die Befüllung der Vorrichtung mit dem zu dosierenden flüssigen Medium vergleichbar einfach und sauber möglich.

Alternativ zu dem beschriebenen Behältersystem können handelsübliche oder gesondert konstruierte Behälter verwendet werden, die befähigt sind, ein in einem flexiblen Beutel mit zwei Anschlüssen befindliches flüssiges Medium aufzunehmen. Durch die Beutelaufnahme wird der Beutel insbesondere so gehalten, dass bestimmte vertikale Positionen der beiden Anschlüsse des Beutels zueinander in Abhängigkeit von dem Befüllungsgrad des Beutels vorgegeben werden können. Bei dem Behälter muss es sich daher nicht um einen geschlossenen Behälter handeln. Bevorzugt wird jedoch ein geschlossener oder verschließbarer Behälter verwendet, so dass zusammen mit dem Beutel ein sogenanntes Bag-in-Box-Behältersystem bereitgestellt wird. Innerhalb einer vorteilhaften Ausführung können Entnahme und Zuführkupplungen am Behälter an vorgegebenen Punkten fixiert sein um ein schnelles einhändiges Herstellen oder Lösen einer Verbindung zu ermöglichen.

Als Material für das Behältersystem können z. B. Kunststoff, Metall, Keramik, Glas, Papier oder Verbundmaterialien oder Kombinationen davon eingesetzt werden. Insbesondere bei starren Materialien kann vorzugsweise ein Druckausgleichssystem installiert werden.

Bei der Verwendung des erfindungsgemäßen Behältersystems (Bag-in-Box-System) wird der Beutel nahezu restentleert. Unter nahezu restentleert wird dabei verstanden, dass der entleerte Beutel höchstens noch 5 Gew.-%, besonders bevorzugt höchstens 1 Gew.-%, bezogen auf das Gewicht der maximalen Füllmenge, enthält. Dabei falten oder legen sich die innen liegenden Rohr- oder Schlauchteile, sofern vorhanden, zusammen mit dem umgebenden Beutel auf ein geringst mögliches Maß zusammen. Nach der Entleerung des Beutelinhaltes, optional über eine außerhalb des Behältersystems befindliche Kupplung, kann das Behältersystem aus dem Kreislauf entfernt werden. Behälter und Beutel können entweder getrennt oder gemeinsam entsorgt oder einer Wiederverwendung zugeführt werden.

Die Leitung(en) des Kreislaufs und der Dosierstrecke werden aus einem für das entsprechende Medium geeigneten, d. h. inerten Material gefertigt. Sie sind vorzugsweise flexibel und leicht auszutauschen. Geeignete Materialien sind z. B. kommerziell erhältliche Kunststoffschläuche, z. B. aus Polyethylen (PE), Polypropylen(PP) oder Polyurethan (PU).

Insbesondere umfasst die Dosierstrecke wenigstens ein Ventil.

In einer bevorzugten Ausführungsform der erfindungsgemäßen Vorrichtung umfasst die Dosierstrecke wenigstens eine Fördereinrichtung. So kann die Dosierstrecke alternativ auch als Hochdruckentnahmestrecke ausgeführt werden.

Die Menge des flüssigen Mediums, das dosiert wird, kann z. B. über die Zeit, die ein Ventil geöffnet und/oder eine Fördereinrichtung eingeschaltet ist, gesteuert werden.

In einer besonders bevorzugten Ausführungsform umfasst die Dosierstrecke eine Entnahmevorrichtung.

Bei einer solchen Entnahmevorrichtung kann es sich um einen Hahn, ein Ventil, einen Dispenser, ein Reduzierstück, ein Übergangsstück, wie beispielsweise eine Tülle, eine Olive, einen Adapter, eine Kupplung, ein Mehrweg-Fitting, wie beispielsweise ein Y- oder ein T-Stück, einen Verteiler, sonstige Fittings, wie beispielsweise ein Winkelstück, oder um eine beliebige andere, für den Anwendungsfall geeignete Entnahmevorrichtung handeln. Im Speziellen wird ein Mehrweg-Fitting, insbesondere ein Y- oder ein T-Stück, oder ein im Folgenden beschriebenes Dosierventil als Entnahmevorrichtung verwendet, um alternativ oder zusätzlich zu dem zu dosierenden flüssigen Medium ein zweites flüssiges Medium dosieren zu können.

In einer geeigneten Ausführungsform der erfindungsgemäßen Vorrichtung enthält die Entnahmevorrichtung ein selbstschließendes Ventil (Dosierventil). Das selbstschließende Ventil ist so konstruiert, dass das zu dosierende flüssige Medium durch den sich, beispielsweise bei eingeschalteter Fördereinheit bzw. Pumpe, aufbauenden Druck über einen autohydraulischen Mechanismus die Verschlussmittel, z. B. die Verschlussnadel, öffnet und das Medium z. B. über eine Dosierdüse freigibt. Insbesondere umfasst dieses selbstschließende Ventil einen Zylinder, einen Deckel, der den Zylinder an einer offenen Seite verschließt, eine Dosierdüse, die in der dem Deckel gegenüber liegenden offenen Seite des Zylinders eingepasst ist, ein in der Zylinderwand unmittelbar oberhalb der Dosierdüse angeordnetes Fitting, eine Verschlussnadel mit einer umlaufenden Dichtung, die senkrecht in die Dosierdüse geführt werden kann, eine Zugstange, mittels derer die Verschlussnadel in vertikaler Richtung bewegt werden kann, und einen gegenüber der Zylinderinnenwand abgedichteten Federkolben, an dem die Verschlussnadel über die Zugstange so befestigt ist, dass die Verschlussnadel mit der Dichtung die Düsenöffnung gegenüber der Umgebung luftdicht verschließt, wenn sich der Kolben in einer unteren Endstellung befindet.

Das Ventil wird durch das zu dosierende flüssige Medium geöffnet, wenn der Druck des anstehenden, zu dosierenden Mediums hoch genug ist, um die Federkraft des Federkolbens zu überwinden. Damit dient das zu dosierende flüssige Medium gleichzeitig als eine Art von Hydraulikflüssigkeit.

Die Verschlussnadel wird vorzugsweise so ausgeführt, dass sie an ihrem unteren Ende einen Dorn aufweist, der bei geschlossenem Ventil durch die Dosierdüse vollständig hindurch geht. So wird ein Verkleben der Dosierdüse verhindert und bei einem Öffnen des Ventils steht dem zu dosierenden flüssigen Medium immer der vollständige Durchgang durch die Dosierdüse zur Verfügung.

Über das Fitting gelangt das zu dosierende flüssige Medium in das Ventil. Durch die Anordnung des Fittings unmittelbar oberhalb der Dosierdüse wird das Bilden eines Totraumes vermieden.

In einer besonders geeigneten Ausführungsform der erfindungsgemäßen Vorrichtung umfasst das oben beschriebene, selbstschließende Ventil zusätzlich ein zweites, dem oben beschriebenen Fitting gegenüber liegendes, unmittelbar oberhalb der Dosierdüse angeordnetes Fitting. Damit kann alternativ oder zusätzlich zu dem dosierenden flüssigen Medium ein zweites flüssiges Medium dosiert werden.

Beide flüssigen Medien können als Hydraulikflüssigkeit dienen. Jeweils das Medium, das gerade dosiert wird, übernimmt die Funktion der Hydraulikflüssigkeit. Wird das Ventil über eines der Fittings mit dem entsprechenden flüssigen Medium beaufschlagt, so dichtet die in dem gegenüberliegenden Fitting stehende Flüssigkeit dieses Fitting und die dahinter anschließende Leitung ab, da die flüssigen Medien im Wesentlichen nicht zu komprimieren sind.

Die Materialien für Ventilkörper und Kolbendichtungen werden entsprechend den Anforderungen, die Medien und Druck stellen, ausgewählt. Vorzugsweise ist der Ventilkörper aus Edelstahl gefertigt, ebenso wie der Ventilkern und die Nadel. Es können aber auch hochfeste Kunststoffe, Verbundmaterialien und/oder Glas verwendet werden. Die Dichtungsmaterialien bestehen aus beständigen oder mit beständigen Materialien beschichteten Werkstoffen.

Das erfindungsgemäß eingesetzte Dosierventil bietet gegenüber herkömmlichen Dosierventilen den Vorteil, dass das Dosiermedium gleichzeitig die Funktion der Hydraulikflüssigkeit und des Dichtmittels übernimmt. Darüber hinaus kann man es über einen zweiten Zugang, insbesondere ein zweites Fitting, spülen. Ein weiterer Vorzug ist, dass das Dosiermedium gegen Luftkontakt direkt an der Düsenöffnung abgedichtet ist. Ein Eintrocknen der Düse wird damit sehr wirksam vermieden. Selbst wenn Partikel die Düsenöffnung verstopfen sollten, stößt die Verschlussnadel durch die Kraft des Federkolbens beim Verschließen durch die Düsenöffnung. Dadurch wird die Düsenöffnung stets auf mechanischem Wege frei gehalten. Durch wiederholte Spülvorgänge mit geeigneten Lösungs- oder Reinigungsmitteln kann ein Verstopfen des Ventils auch bei langen Standzeiten nahezu ausgeschlossen werden. Besonders beim Dosieren von Farbstoffzusammensetzungen, Klebstoffen und anderen kritischen flüssigen Formulierungen steht so ein zuverlässiges und wartungsfreies Ventil zur Verfügung.

Insbesondere wird das erfindungsgemäß eingesetzte selbstschließende Ventil zum Öffnen und Schließen elektronisch, mechanisch oder pneumatisch angesteuert.

Das Ventil kann zusätzlich oder optional mit einem Antriebsmittel, beispielsweise einem Motor oder Hilfsmotor, einem pneumatischen Antrieb oder einem Magnet ausgestattet werden, um das Ventil ansteuern zu können. Über die Steuerung des entsprechenden Antriebmittels kann die Zugstange angehoben oder gesenkt werden.

Es ist auch möglich, mehrere Medien über eine einzelne Entnahmevorrichtung zu dosieren oder Lösungsmittel und Dosiermedium gleichzeitig zu dosieren (Beimischung). Dazu muss die Entnahmevorrichtung über einen zweiten Zugang verfügen. Dabei bestimmen die Druckverhältnisse das Mischungsverhältnis der Komponenten. Speziell die Verwendung bei Zwei-Komponenten-Systemen ist möglich.

Die erfindungsgemäße Hochdruckdosierung erlaubt die optionale Installation einer weiteren Neuentwicklung, der sogenannten Split-Dosierung. Das hier beschriebene Dosierverfahren ist eine abgewandelte Form der aus der Gaschromatographie bekannten Splitinjektion, die hier nun für Flüssigkeiten zur Quotient-Dosierung angewandt wird. Bei der Split-Dosierung werden einem sekundären Dosierkanal über einen weiteren Zugang, vorzugsweise über ein T-, Y-, X-Stück oder ein (Automatik-)Ventil definierte, einstellbare Mengen an Lösungsmittel beigemischt. Liefert beispielsweise der sekundäre Dosierkanal eine Menge von 1000 µl bei einem bestimmten Dosierimpuls und ist das Splitverhältnis auf 1:100 eingestellt, so werden bei einer Dosiermenge von 1000 µl nun 990 µl Lösungsmittel und 10 µl aus der sekundären Dosierstrecke dosiert. Die überschüssige Menge wird über das Splitventil abgeleitet.

Der Einsatz einer solchen Split-Dosiereinheit ermöglicht es, geringste Mengen an zu dosierender Flüssigkeit mit einer bisher nicht möglichen Genauigkeit und Präzision zu dosieren, da nur ein Quotient der zu dosierenden Flüssigkeits-/Lösungsmittelmischung vorgegeben und über das Dosierventil dosiert wird. Die gewünschte Einstellung des Splitverhältnisses kann mittels der Ventileinstellung und der Veränderung des Pumpendrucks gesteuert und kalibriert werden.

In einer weiteren vorteilhaften Ausführungsform enthält die erfindungsgemäße Vorrichtung eine Spüleinheit. Diese Spüleinheit umfasst ein Ventil und/oder eine Fördereinheit für ein Lösungs- bzw. Reinigungsmittel sowie einen Behälter für ein Lösungs- bzw. Reinigungsmittel. Das Lösungs- bzw. Reinigungsmittel gelangt aus dem Behälter durch die Fördereinheit und/oder das Ventil über einen zweiten Zugang in die Entnahmevorrichtung.

Optional ist eine Anlage, die zwei oder mehrere erfindungsgemäße Vorrichtungen und optional eine oben beschriebene Spüleinheit umfasst.

Gemäß einer Ausführungsform der erfindungsgemäßen Anlage werden die einzelnen Fördereinrichtungen, Fördereinheiten und/oder Ventile der Vorrichtungen sowie die Fördereinheit und/oder das Ventil der Spüleinheit von einer zentralen Steuereinheit gesteuert.

Innerhalb einer Anlage können mehrere Vorrichtungen und/oder eine Spüleinheit parallel oder alternierend betrieben werden. Eine entsprechende Steuerelektronik und Betriebssoftware erlaubt die Ansteuerung von Fördereinrichtungen, Fördereinheiten und/oder Ventilen, so dass auch eine simultane Dosierung verschiedener flüssiger Medien möglich ist.

Optional ist weiterhin die Verwendung einer erfindungsgemäßen Anlage zum Abfüllen und/oder Dosieren von flüssigen Medien, bevorzugt von Farbstoffzusammensetzungen, besonders bevorzugt von pigmenthaltigen Farbstoffzusammensetzungen.

Unter Konfektionieren im Sinne der vorliegenden Erfindung wird das Fertigstellen eines Produktes verstanden. Damit umfasst sind alle Arbeiten, die nach dem Abfüllen der Komponenten zur Herstellung des verkaufsfertigen Produktes notwendig sind, wie beispielsweise das Veredeln, Mischen, Verpacken und/oder die Bildung von verkaufsfähigen Einheiten.

Im Folgenden wird die vorliegende Erfindung an Hand eines Ausführungsbeispiels mit Bezug auf die Zeichnungen erläutert.
- Figur 1: zeigt eine erfindungsgemäße Vorrichtung zum Dosieren eines flüssigen Mediums mit einer Spüleinheit.
- Figur 2: zeigt ein selbstschließendes Ventil im geschlossenen Zustand.
- Figur 3: zeigt ein selbstschließendes Ventil im geöffneten Zustand.
- Figur 4: zeigt einen Behälter von innen.
- Figur 5: zeigt ein erfindungsgemäßes Behältersystem (Bag-in-Box-System) mit gefülltem Beutel.
- Figur 6: zeigt ein erfindungsgemäßes Behältersystem (Bag-in-Box-System) mit entleertem Beutel.
- Figur 7: zeigt eine mögliche Ausführungsform eines Dosierkopfes.

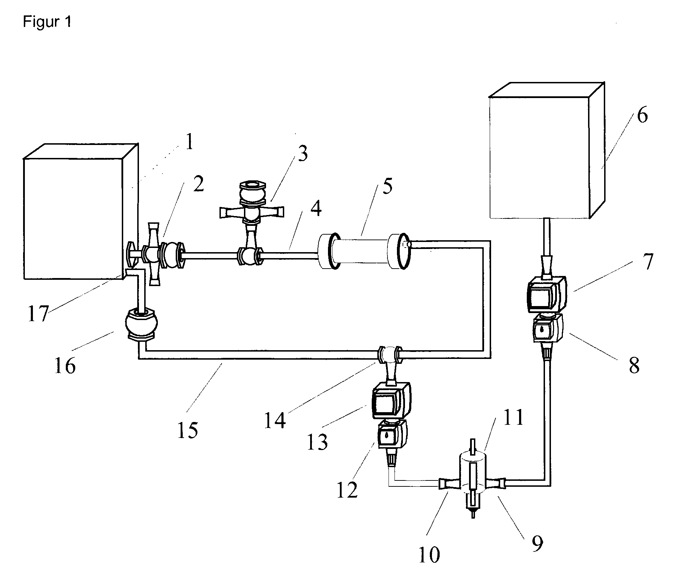

In Figur 1 ist eine erfindungsgemäße Vorrichtung zum Dosieren eines flüssigen Mediums mit einer Spüleinheit dargestellt. Die hier dargestellte Vorrichtung eignet sich speziell zum Dosieren von Farbstoffzusammensetzungen. Die Vorrichtung besteht im Wesentlichen aus zwei Baugruppen: einem Kreislauf mit einem darin integrierten Behältersystem und einer von dem Kreislauf abgehenden Dosierstrecke.

In dem dargestellten Kreislaufsystem wird das zu dosierende flüssige Medium über eine Fördereinrichtung 5, vorzugsweise eine Pumpe, gefördert. Die Fördereinrichtung 5 führt das Medium aus einem Behältersystem 1 über eine Entnahmeleitung 4, vorbei an einem Entnahmestück 14 und über eine Rückführleitung 15 zurück in das Behältersystem 1. Vor der Rückführung 17 in das Behältersystem 1 befindet sich optional ein Rückschlagventil 16. Der beschriebene Kreislauf ermöglicht die stete Bewegung des Mediums und verhindert die Entmischung und/oder das Absetzen der Komponenten innerhalb des Kreislaufsystems und insbesondere im Behältersystem 1.

Das Behältersystem ist mittels einer Kupplung 2 an die Entnahmeleitung 4 angeschlossen. Bei der Kupplung 2 handelt es sich vorzugsweise um eine Mehrweg-Kupplung. Über eine Mehrweg-Kupplung 2 können beispielsweise Behältersysteme mit gleichen Farbstoffzusammensetzungen in Reihe geschaltet oder eine Restentleerung des Behältersystems 1 vorgenommen werden.

Zwischen der Kupplung 2 und der Pumpe 5 kann optional eine Service-Kupplung 3 eingesetzt sein. Die Service-Kupplung 3 erlaubt z. B. die Einspeisung zusätzlicher flüssiger Medien von außen, wie beispielsweise Reste der gleichen Farbstoffzusammensetzung. Über die Service-Kupplung 3 kann auch eine Restentleerung des Kreislaufsystems vorgenommen werden. Vorzugsweise sind die Kupplung 2 und die Kupplung 3 baugleich.

Die Fördereinrichtung 5 (z. B. die Pumpe) kann in Abhängigkeit von der erforderlichen Durchmischung aufgrund der Eigenschaften des Mediums, wahlweise kontinuierlich oder in Intervallen betrieben werden.

Am Entnahmestück 14 ist die Dosierstrecke angeschlossen. Über die Dosierstrecke kann das zu dosierende Medium aus der Entnahmeleitung entnommen werden. Dazu wird das Medium über eine Fördereinheit 13, beispielsweise eine Pumpe, insbesondere eine Druckpumpe, in die Dosierstrecke gepumpt. Mittels eines (vorzugsweise nachgeschalteten) Ventils 12 wird die Dosierstrecke freigegeben oder gesperrt. Ventil 12 ist z. B. ein Magnetventil. Am Ende der Dosierstrecke ist eine Entnahmevorrichtung 11 über ein Fitting 10 angeschlossen.

Nach Abschluss eines oder mehrerer Dosiervorgänge kann die Entnahmevorrichtung 11 über eine Spüleinheit mit geeignetem Lösungs- bzw. Reinigungsmittel gespült werden. Die Spüleinheit ist über ein Fitting 9 an die Entnahmevorrichtung 11 angeschlossen. Wie bei dem Dosiervorgang wird auch das Lösungs- bzw. Reinigungsmittel bevorzugt unter Druck dosiert. Dazu wird das Lösungs- bzw. Reinigungsmittel über eine Fördereinheit 7, beispielsweise eine Pumpe, insbesondere eine Druckpumpe, aus einem Behälter 6 für Lösungs- bzw. Reinigungsmittel in die Spülstrecke gepumpt. Mittels eines, vorzugsweise nachgeschalteten, Ventils 8 wird die Spülstrecke freigegeben oder gesperrt. Ventil 8 kann beispielsweise ein Magnetventil sein. Handelt es sich bei der Entnahmevorrichtung 11 um das später beschriebene Dosierventil, werden bei dem Spülvorgang der komplette Ventilraum und der Verschlussmechanismus des Dosierventils gespült.

Der Behälter für Lösungs- bzw. Reinigungsmittel 6 kann in geeigneter Weise ausgeführt werden. In einer speziellen Ausführung wird er als erfindungsgemäßes Behältersystem (Bag-in-Box-System) ausgeführt. So ist es möglich, die Vorrichtung in modularer Bauweise auszugestalten.

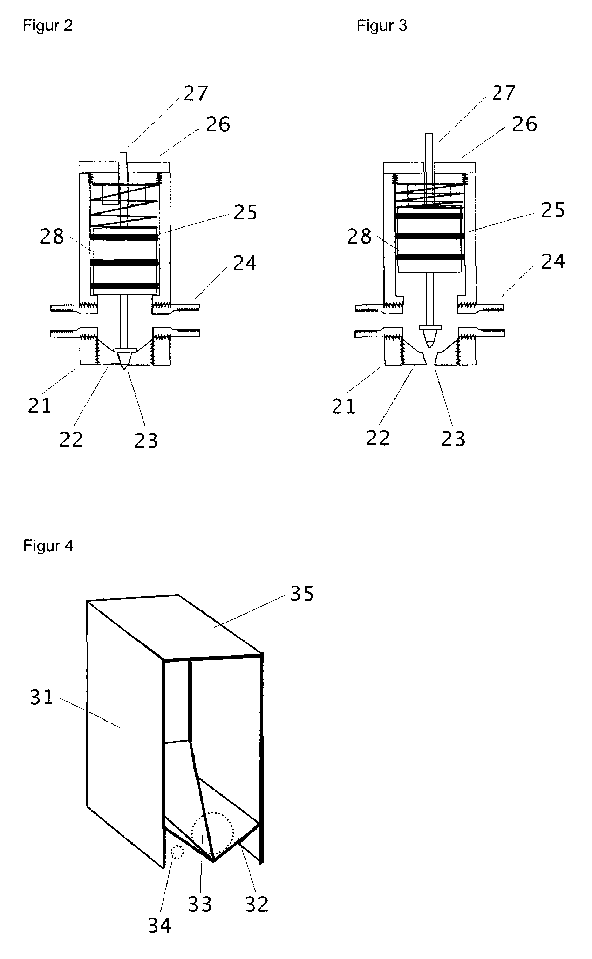

In Figur 2 ist ein selbstschließendes Ventil (Dosierventil) im geschlossenen Zustand und in Figur 3 im geöffneten Zustand dargestellt.

Das dargestellte Ventil besteht im Wesentlichen aus einem Zylinder 21, einem Deckel 26, einer Dosierdüse 22, zwei sich gegenüberliegenden Fittings 24, einer Verschlussnadel 23, einer Zugstange 27 und einem Federkolben 28. Der Deckel verschließt den Zylinder 21 an einer offenen Seite, beispielsweise mit einem Schraubverschluss. Die Dosierdüse ist in die dem Deckel gegenüber liegende offene Seite des Zylinders eingepasst. Die beiden Fittings 24 bzw. 9 und 10 sind in der Zylinderwand unmittelbar oberhalb der Dosierdüse 22 angeordnet. Die Verschlussnadel 23 kann senkrecht in die Dosierdüse 22 geführt werden. Mittels der Zugstange 27 kann sie über den Federkolben 28 in vertikaler Richtung bewegt werden. Die Verschlussnadel 23 ist mit einer umlaufenden Dichtung versehen. Der Federkolben 28 ist gegenüber der Zylinderinnenwand mit einer oder mehreren Dichtung(en) 25 abgedichtet. An ihm ist die Verschlussnadel 23 über die Zugstange 27 so befestigt, dass die Verschlussnadel 23 mit der Dichtung die Öffnung der Dosierdüse 22 gegenüber der Umgebung luftdicht verschließt, wenn sich der Federkolben 28 in einer unteren Endstellung befindet.

Das selbstschließende Ventil 11 ist so konstruiert, dass das zu dosierende flüssige Medium durch den sich, beispielsweise bei eingeschalteter Fördereinheit bzw. Pumpe 13, aufbauenden Druck über einen autohydraulischen Mechanismus die Verschlussnadel 23 öffnet und das Medium über die Dosierdüse 22 freigibt. Dabei schiebt der Flüssigkeitsdruck den Federkolben 28 im Zylinder 21 nach oben. Die über eine Zugstange 27 befestigte Verschlussnadel 23 mit einer Dichtung 25 wird dabei zurückgezogen, wie in Figur 3 veranschaulicht. Ab diesem Moment strömt das Medium über die Dosierdüse 22 nach außen. Ist die gewünschte Dosiermenge erreicht, schließt das Magnetventil 12 in der Dosierstrecke und die Pumpe 13 kann abgeschaltet werden. Mit dem Schließen des Magnetventils 12 fällt der Druck im Zylinder 21 des Dosierventils augenblicklich ab, der Federkolben drückt die Verschlussnadel 23 durch und die Dichtung 25 in die Düsenöffnung, wodurch das Ventil dicht verschlossen wird, wie in Figur 2 veranschaulicht. Das Dosierventil wird über Fittings 24 mit dem entsprechenden Medium beaufschlagt und über dessen Druck gesteuert. Das Dosiermedium übernimmt dabei die Aufgabe der Hydraulikflüssigkeit.

Bei der Dosierung bestimmt die Öffnungszeit des Dosierventils 11 die dosierte Menge. Sie ist abhängig von dem von der Pumpe 13 erzeugten Druck, vom Innendurchmesser der Dosierdüse 22 und der Viskosität des zu dosierenden Mediums. Die Pumpe arbeitet vorzugsweise in einem Druckbereich von etwa 0,1 bar bis etwa 25 bar, besonders bevorzugt von mehr als 1 bar bis etwa 25 bar. Bei hochviskosen Medien kann eine Hochdruckpumpe eingesetzt werden, die bei einem Druck von mehr als etwa 25 bar eingesetzt wird. Dabei ist zu beachten, dass die innerhalb der Dosierstrecke verwendeten Leitungen und Fittings für den eingesetzten Druckbereich geeignet sind.

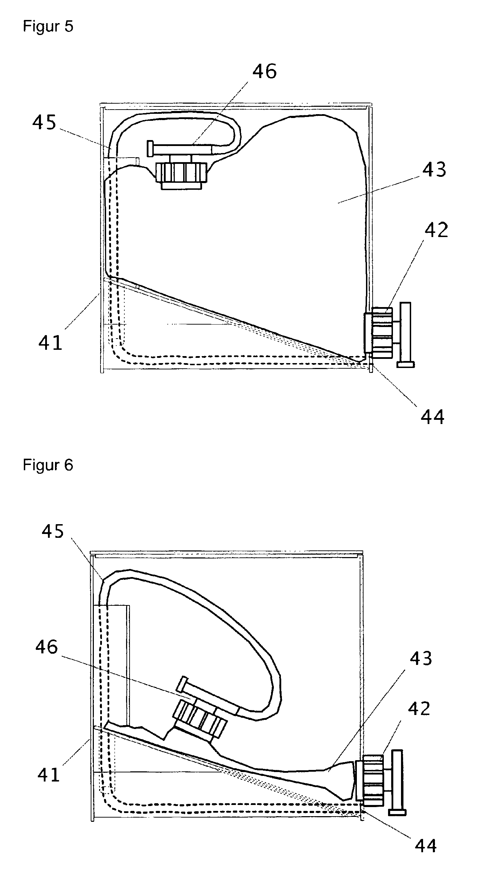

Figur 4 zeigt eine Innenansicht einer Ausführung des Behälters. In Figur 5 ist ein erfindungsgemäßes Behältersystem (Bag-in-Box-System) mit gefülltem Beutel und in Figur 6 ein erfindungsgemäßes Behältersystem (Bag-in-Box-System) mit entleertem Beutel dargestellt.

Bei dem in Figuren 5 und 6 dargestellten Bag-in-Box-System ist ein flüssigkeitsdichter Beutel 43 aus einem geeignetem Material in einem Behälter 41 untergebracht ist. Der Behälter 41 hat eine Entnahmeöffnung 33 und eine Zuführöffnung 34 im unteren Bereich. Durch die Entnahmeöffnung 33 im Behälter 41 wird ein Entnahmeanschluss 42 des Beutels 43 hindurchgeführt. Eine flexible Verbindungsleitung 45 führt von der Zuführöffnung 44 zu einem Zuführanschluss 46 des Beutels 43. Der Zuführanschluss 46 liegt zumindest bei vollständiger Befüllung des Beutels 43 oberhalb der Entnahmeöffnung 33 und des Entnahmeanschlusses 42. In der in Figur 4 dargestellten Ausgestaltung befindet sich der Zuführanschluss 46 unabhängig vom Befüllungszustand des Beutels 43 oberhalb des Entnahmeanschlusses 42. Wie durch die gestrichelten Linien angedeutet ist, wird die Verbindungsleitung 45 von der Zuführöffnung 44 unter dem eingeschrägten bzw. geneigtem Boden des Behälters 41 und anschließend hinter dem Beutel 43 zum Zuführanschluss 46 im oberen Bereich des Beutels 43 hoch geführt.

Wie im Zusammenhang mit der Ausführung nach Figur 4 zu erkennen ist, hat der Behälter 31 bzw. 41 eine im Wesentlichen quaderförmige äußere Grundform. Die Entnahmeöffnung 33 und die Zuführöffnung 34 bzw. 44 sind an derselben Stirnseite des Behälters 31 bzw. 41 angeordnet. Der Behälterboden 32 ist von den Längsseiten zur Mitte hin geneigt, so dass er eine Rinne in Längsrichtung bildet. Außerdem ist der Boden von der der Entnahmeöffnung 33 gegenüber liegenden Stirnseite zu der Stirnseite mit der Entnahmeöffnung 33 geneigt. Im hinteren Teil des Behälters, also zu der den Öffnungen abgewandten Stirnseite hin, ist ein Blech eingeschrägt. Dieses Blech stellt eine Haltevorrichtung für die flexible Verbindung 45 von der Zuführöffnung 34 bzw. 44 des Behälters zum Zuführanschluss 46 des Beutels 43 dar. Einerseits wird damit die Verbindung 45 hinter dem Beutel 43 fixiert. Andererseits wird so der gesamte Beutel 43 zur Entnahmeöffnung 33 hin geneigt, so dass ein vollständiges Abfließen des flüssigen Mediums unterstützt wird.

Das dargestellte Behältersystem ist ein geschlossenes System, das als Bag-in-Box-System vorzugsweise im Wesentlichen frei von Luftblasen befüllt ist.

Der Vorzug des beschriebenen Behältersystems ist die nahezu totvolumenfreie Ausnutzung des gesamten Inhalts, da sich der Beutel 43 der Behälterform anpasst. Ein weiterer Vorteil dieses Behältersystems ist, dass der Behälter 31, 41 selbst gleichzeitig als Transportverpackung dienen kann. Eine andere Variante sieht vor, dass der Beutel 43 aus einem Transportbehälter entnommen wird und in den Behälter 31, 41 eingesetzt wird. Dabei wird nur der Beutel 43 an den Kreislauf angeschlossen. Der Beutel 43 kann als Ein- oder Mehrwegsystem ausgelegt sein.

Der Beutel 43 ist in dem Behälter 31, 41 insbesondere so angeordnet, dass der Abstand der beiden Anschlüsse, d.h. des Entnahmeanschlusses 42 und des Zuführanschlusses 46, des vollständig gefüllten Beutels 43 mindestens 40 %, vorzugsweise mindestens 50 %, des direkten Abstands der am weitesten voneinander entfernten Punkte auf der Wandung des Beutels 43 betragen. Der Abstand zweier Punkte wird hierbei als Länge der gradlinigen Verbindungslinie der beiden Punkte bestimmt. Die Anschlüsse 42, 46 sind speziell so angeordnet, dass in jedem Füllzustand des Beutels 43 eine Durchmischung des Beutelinhalts durch ein Umwälzen des Mediums, z. B. im Kreislauf einer Dosiervorrichtung, erreicht wird.

Die Beutelanschlüsse sind so konstruiert oder gewählt, dass sie das Anschließen an das Kreislaufsystem, vorzugsweise über Schnellkupplungen, vereinfachen. Die Durchströmung des Behältersystems sorgt für eine Durchmischung, sobald der Kreislauf über die Fördereinrichtung aktiviert ist. Bei zum Absetzen neigenden Medien ist die Konstruktion des Behälterbodens wesentlich. Dieser ist so konstruiert, dass sich absetzende Partikel oder Phasen nahe dem Entnahmebereich sammeln (Absetztrichterprinzip). Die sich absetzenden Partikel werden durch ein Aktivieren des Kreislaufes als erstes erfasst und am höchsten Punkt des Beutels wieder eingespeist. Es können auch weitere, Verwirbelung fördernde oder erzeugende Elemente eingebaut werden, die einen Rühr- oder Durchmischungseffekt unterstützen, wie etwa Rührwerke, oder auch Elemente, die auf Anregung von außen eine Bewegung des Mediums erzeugen. Werden Medien eingesetzt, die nicht zu einer Entmischung neigen, kann auf ein Kreislaufsystem verzichtet werden. In diesem Fall muss lediglich eine Entnahmestrecke aus dem Behältersystem zur Dosierung vorhanden sein. Werden Beutel 43 nach dem Bag-in-Box-System eingesetzt, dient der Behälter 31, 41 lediglich als Aufnahmevorrichtung. Diese kann zusätzlich mit einem Deckel verschlossen werden, und die Zuführleitungen können im Inneren verbaut werden.

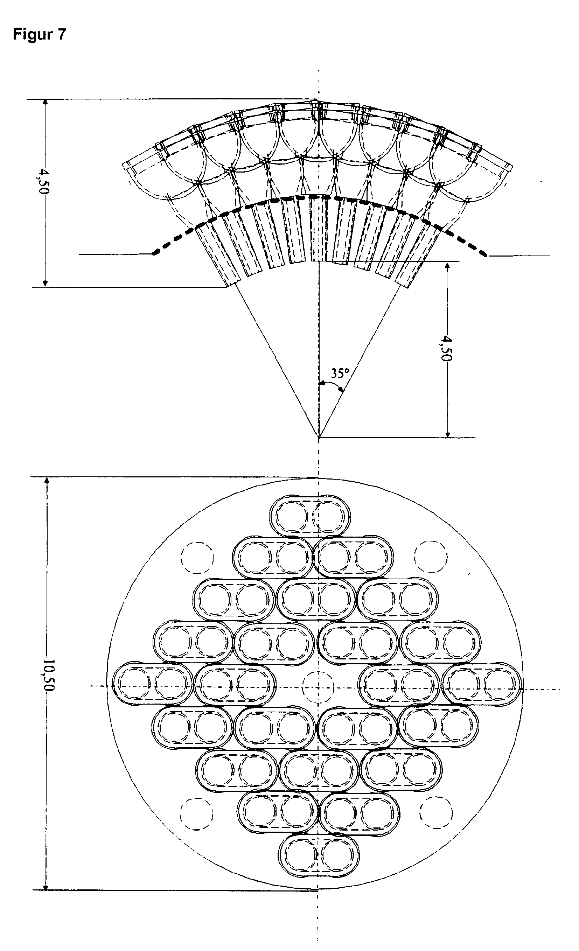

Werden mehrere Vorrichtungen innerhalb einer Anlage zusammengefasst, so können die einzelnen Entnahmevorrichtungen zu einer Baugruppe, einem sogenannten Dosierkopf zusammengefügt werden. Figur 7 zeigt eine mögliche Ausführungsform eines Dosierkopfes. Bei den dargestellten Entnahmevorrichtungen handelt es sich um 24 Y-Stücke, die in einem Dosierkopf zusammengefasst sind.

Die Neigungswinkel der Entnahmevorrichtungen können so gewählt werden, dass sich alle Dosierstrahlen an einem Punkt kreuzen. Damit wird die Punktdosierung mehrer Komponenten ermöglicht. Optische Hilfsmittel, vorzugsweise Laserdioden die parallel zu den Dosierstrahlen ausgerichtet sind, bestimmen den Dosierpunkt auf der Oberfläche des Dosierziels.

Erfindungsgemäß wird ein modulares Flüssigkeitsdosiersystem mit einen geschlossenen Pumpen-/Behältersystem gefertigt. Die Anordnung mehrerer dieser Systeme bilden Mehrkanalanlagen, welche die simultane Dosierung von beliebig vielen Einzelkomponenten oder Zubereitungen, oder auch fertigen Medien daraus erlauben. Eine solche Anlage besteht im Wesentlichen aus der neuartigen Vorrichtung mit einem oder mehreren Kreislauf/-läufen, Dosierstrecke(n), Prozesssteuereinheit(en), einem statischen oder modularen Korpus und Gehäuse.

Die Fördereinrichtungen und -einheiten, Pumpen und Ventile sind vorzugsweise zusammengefasst in einer Aufnahmeeinheit und vorzugsweise in einem Schubkastensystem untergebracht. Die zusammengefasste Unterbringung ermöglicht den schellen Zugang zu einzelnen Bauteilen zu Service- oder Reparaturzwecken. Auch die Pumpen und/oder die Ventilbestückung können modular als Panel im Schubkasten oder im Dosiermodul untergebracht werden. In einem Containermodul sind die Aufnahmevorrichtungen für die Behälter bzw. Beutel der Medien und die Schnellkupplungseinheiten zur Herstellung des Kreislaufs untergebracht. Beide Module verfügen über eigene Leitungssysteme, wie beispielsweise interne Verrohrungen und/oder Schlauchsysteme, die kompatibel und kopplungsfähig sind. Dosiermodul und Containermodul verfügen zusätzlich über eine eigene Stromversorgung und interne Verkabelung.

Die Dosierkreisläufe mit geschlossenem System können überall dort eingesetzt werden, wo bereits herkömmliche Anlagen in Betrieb sind. Die Anlagen mit einem geschlossenem System können mit allen Arten von Flüssigkeits-, Pasten- und/oder Pigmentsystemen wie Klebstoffen, Lebensmittelgrundstoffen, Ölen, Lösungsmitteln, Alkyd-, Kunstharz-, Polymer-, Acryl-, Latex-, Nanolacken, sowie Dispersions- und Naturfarbzusammensetzungenen betrieben werden.

Das erfindungsgemäß bevorzugte Bag-in-Box-System eröffnet völlig neuartige Einsatzmöglichkeiten, vorzugsweise in der Verwendung als Farbmischmaschine. Die Mischanlagen sind nicht an vorgegebene Behältergrößen gebunden. Je nach Qualität der Beutel ist eine Mehrweglösung möglich, sofern eine Wiederbefüllung gewünscht oder bevorzugt wird. Die Ausführung als Bag-in-Box-System trägt zur Abfallreduzierung bei, da keine gesonderten Transportverpackungen notwendig sind. Die Transportkosten werden reduziert, da der komplette Nutzraum in Würfel- oder Quaderform zur Verfügung steht.

Mit dem geschlossenen System können auch lösemittelhaltige Medien verarbeitet werden, da keine gesundheitsschädlichen oder explosionsgefährlichen Dämpfe entweichen können.

### Bezugszeichenliste zu den Figuren 1 bis 6

- 1: Behältersystem
- 2: Mehrweg-Kupplung
- 3: Service-Kupplung
- 4: Entnahmeleitung
- 5: Fördereinrichtung
- 6: Behälter für Lösungs- bzw. Reinigungsmittel
- 7: Fördereinheit
- 8: Ventil
- 9: Fitting für den Zugang des Lösungs- bzw. Reinigungsmittels
- 10: Fitting für den Zugang des Dosiermediums
- 11: Entnahmevorrichtung, bzw. Dosierventil
- 12: Ventil
- 13: Fördereinheit
- 14: Entnahmestück
- 15: Rückführleitung
- 16: Rückschlagventil
- 17: Rückführung
- 21: Zylinder
- 22: Dosierdüse
- 23: Verschlussnadel
- 24: Fittings
- 25: Dichtung
- 26: Deckel
- 27: Zugstange
- 28: Federkolben
- 31: Behälter
- 32: Behälterboden
- 33: Entnahmeöffnung
- 34: Zuführöffnung
- 35: Deckel
- 41: Behälter
- 42: Entnahmeanschluss
- 43: Beutel
- 44: Zuführöffnung
- 45: Verbindung
- 46: Zuführanschluss

## Patentansprüche

1. Behältersystem, umfassend einen formstabilen Behälter und einen in dem Behälter angeordneten flexiblen Beutel, der zwei Anschlüsse aufweist, die mit zumindest einer Öffnung des Behälters korrespondieren, wobei
- der Behälter eine im Wesentlichen quaderförmige äußere Grundform auf weist,
- die Entnahmeöffnung an einer Stirnseite des Behälters angeordnet ist,
- der Boden des Behälters von den Längsseiten zur Mitte hin geneigt ist, so dass er eine Rinne in Richtung der Entnahmeöffnung bildet, und
- der Boden von der der Entnahmeöffnung gegenüber liegenden Stirnseite zu der Stirnseite mit der Entnahmeöffnung geneigt ist
und die Siegelung des Beutels an die umgebende, starre Behälterform angepasst ist.

2. Behältersystem nach Anspruch 1, wobei die zwei Anschlüsse des Beutels mit zwei Öffnungen des Behälters korrespondieren.

3. Behältersystem nach einem der vorhergehenden Ansprüche, wobei der Behälter im unteren Bereich die Entnahmeöffnung aufweist, die mit dem ersten Anschluss des Beutels gekoppelt ist, und wobei der zweite Anschluss des Beutels über eine Verbindungsleitung mit einer Zuführöffnung des Behälters verbunden ist, wobei der zweite Anschluss des in dem Behälter befindlichen Beutels zumindest bei vollständiger Befüllung des Beutels oberhalb des Entnahmeöffnung des Behälters liegt.

4. Behältersystem nach Anspruch 3, wobei die Verbindungsleitung von der Zuführöffnung des Behälters zum zweiten Anschluss des Beutels ganz oder teilweise flexibel ausgeführt ist.

5. Behältersystem nach Anspruch 4, wobei die Verbindungsleitung von der Zuführöffnung unter dem geneigten Boden des Behälters und anschließend hinter dem Beutel zum zweiten Anschluss im oberen Bereich des Beutels hoch geführt ist.

6. Behältersystem nach Anspruch 4 oder 5, wobei die Verbindungsleitung im Inneren des Behälters bis in den oberen Teil des Behälters starr ist und von dort bis zum zweiten Anschluss des Beutels flexibel ist.

7. Vorrichtung zum Dosieren eines flüssigen Mediums, umfassend einen Kreislauf für das flüssige Medium mit einem in den Kreislauf integrierten Behältersystem und einer von dem Kreislauf abgehenden Dosierstrecke, wobei das Behältersystem einen formstabilen Behälter und einen in dem Behälter angeordneten flexiblen Beutel umfasst, der zwei Anschlüsse aufweist, die mit zumindest einer Öffnung des Behälters korrespondieren, wobei
- der Behälter eine im Wesentlichen quaderförmige äußere Grundform aufweist,
- die Entnahmeöffnung an einer Stirnseite des Behälters angeordnet ist,
- der Boden des Behälters von den Längsseiten zur Mitte hin geneigt ist, so dass er eine Rinne in Richtung der Entnahmeöffnung bildet, und
- der Boden von der der Entnahmeöffnung gegenüber liegenden Stirnseite zu der Stirnseite mit der Entnahmeöffnung geneigt ist.

8. Vorrichtung nach Anspruch 7, wobei die Menge des flüssigen Mediums, das dosiert wird, über die Zeit, die ein Ventil geöffnet und/oder eine Fördereinrichtung eingeschaltet ist, steuerbar ist.

9. Vorrichtung nach Anspruch 7 oder 8, wobei die Dosierstrecke eine Entnahmevorrichtung umfasst, die ein selbstschließendes Ventil enthält, wobei das selbstschließende Ventil umfasst:
- einen Zylinder,
- einen Deckel, der den Zylinder an einer offenen Seite verschließt,
- eine Dosierdüse, die in der dem Deckel gegenüber liegenden offenen Seite des Zylinders eingepasst ist,
- ein in der Zylinderwand unmittelbar oberhalb der Dosierdüse angeordnetes erstes Fitting,
- eine Verschlussnadel mit einer umlaufenden Dichtung, die senkrecht in die Dosierdüse geführt werden kann,
- eine Zugstange, mittels derer die Verschlussnadel in vertikaler Richtung bewegt werden kann, und
- einen gegenüber der Zylinderinnenwand abgedichteten Federkolben, an dem die Verschlussnadel über die Zugstange so befestigt ist, dass die Verschlussnadel mit der Dichtung die Düsenöffnung gegenüber der Umgebung luftdicht verschließt, wenn sich der Kolben in einer unteren Endstellung befindet,
- wobei das Ventil durch das zu dosierende flüssige Medium geöffnet wird, wenn der Druck des anstehenden, zu dosierenden Mediums hoch genug ist, um die Federkraft des Federkolbens zu überwinden.

10. Vorrichtung nach Anspruch 9, wobei das selbstschließende Ventil zusätzlich ein zweites Fitting umfasst, das dem ersten Fitting gegenüber liegend und das unmittelbar oberhalb der Dosierdüse angeordnet ist, um alternativ oder zusätzlich zu dem zu dosierenden flüssigen Medium ein zweites flüssiges Medium dosieren zu können.

11. Vorrichtung nach Anspruch 10 mit einer Spüleinheit, die ein Ventil und/oder eine Fördereinheit für ein Lösungs- und/oder Reinigungsmittel sowie einen Behälter für das Lösungs- und/oder Reinigungsmittel umfasst, wobei das Lösungs- und/oder Reinigungsmittel aus dem Behälter über die Fördereinheit und/oder das Ventil in das zu der Dosierstrecke gehörende Dosierventil gelangt.

12. Verfahren zum Mischen einer Farbformulierung, bei dem
- ein Farbmuster gewählt wird,
- entsprechend dem gewählten Farbmuster Farbstoffzusammensetzungen über mehrere Vorrichtungen nach einem der Ansprüche 7 bis 11 einer Grundformulierung in einem geeigneten Behälter zudosiert werden, und
- diese Farbformulierung anschließend in dem Behälter zu einem fertigen Pro-dukt konfektioniert wird.

## Claims

1. Container system comprising a dimensionally stable container and a flexible bag arranged in the container, said bag having two connections which correspond to at least one opening in the container, wherein
- the container has a substantially cuboidal outer basic shape,
- the removal opening is arranged on an end side of the container,
- the bottom of the container is inclined from the longitudinal sides toward the middle, so that it forms a channel in the direction of the removal opening, and
- the bottom is inclined from the end side located opposite the removal opening to the end side having the removal opening,
and the sealing of the bag is matched to the surrounding, rigid container shape.

2. Container system according to Claim 1, wherein the two connections of the bag correspond to two openings in the container.

3. Container system according to either of the preceding claims, wherein, in its lower region, the container has the removal opening, which is coupled to the first connection of the bag, and wherein the second connection of the bag is connected to a feed opening of the container via a connecting line, wherein the second connection of the bag located in the container is located above the removal opening of the container at least when the bag is completely filled.

4. Container system according to Claim 3, wherein the connecting line is embodied in an entirely or partially flexible manner from the feed opening of the container to the second connection of the bag.

5. Container system according to Claim 4, wherein the connecting line is guided from the feed opening under the inclined bottom of the container and subsequently behind the bag up to the second connection in the upper region of the bag.

6. Container system according to Claim 4 or 5, wherein the connecting line is rigid in the interior of the container as far as the upper part of the container and is flexible from there as far as the second connection of the bag.

7. Apparatus for metering a liquid medium, comprising a circuit for the liquid medium having a container system integrated into the circuit and a metering section branching off from the circuit, wherein the container system comprises a dimensionally stable container and a flexible bag arranged in the container, said bag having two connections which correspond to at least one opening in the container, wherein
- the container has a substantially cuboidal outer basic shape,
- the removal opening is arranged on an end side of the container,
- the bottom of the container is inclined from the longitudinal sides toward the middle, so that it forms a channel in the direction of the removal opening, and
- the bottom is inclined from the end side located opposite the removal opening to the end side having the removal opening.

8. Apparatus according to Claim 7, wherein the quantity of the liquid medium which is metered is controllable over the time during which a valve is opened and/or a delivery device is switched on.

9. Apparatus according to Claim 7 or 8, wherein the metering section comprises a removal apparatus which contains a self-closing valve, wherein the self-closing valve comprises:
- a cylinder,
- a cover which shuts off the cylinder on an open side,
- a metering nozzle which is fitted into that open side of the cylinder which is located opposite the cover,
- a first fitting which is arranged immediately above the metering nozzle in the cylinder wall,
- a shut-off needle having an encircling seal which can be guided perpendicularly into the metering nozzle,
- a pull rod by means of which the shut-off needle can be moved in the vertical direction, and
- a spring piston which is sealed off with respect to the cylinder inner wall, and to which the shut-off needle is fastened via the pull rod such that the shut-off needle shuts off the nozzle opening from the environment in an airtight manner by way of the seal when the piston is located in a bottom end position,
- wherein the valve is opened by the liquid medium to be metered when the pressure of the medium to be metered which is present is high enough to overcome the spring force of the spring piston.

10. Apparatus according to Claim 9, wherein the self-closing valve additionally comprises a second fitting which is located opposite the first fitting and which is arranged immediately above the metering nozzle, in order to be able to meter a second liquid medium alternatively or in addition to the liquid medium to be metered.

11. Apparatus according to Claim 10, having a flushing unit which comprises a valve and/or a delivery unit for a solvent and/or cleaning agent and a container for the solvent and/or cleaning agent, wherein the solvent and/or cleaning agent passes from the container via the delivery unit and/or the valve into the metering valve associated with the metering section.

12. Process for mixing a paint formulation, in which
- a colour pattern is selected,
- in accordance with the colour pattern selected, dye compositions are metered via a plurality of apparatuses according to one of Claims 7 to 11 into a basic formulation in a suitable container, and
- this paint formulation is subsequently subjected to final processing in the container to form a finished product.

## Revendications

1. Système de récipient, comprenant un récipient de forme stable et un sac flexible disposé dans le récipient et qui présente deux raccords qui correspondent à au moins une ouverture du récipient, dans lequel
- le récipient présente une forme de base extérieure essentiellement parallélépipédique,
- l'ouverture de prélèvement est disposée dans un côté frontal du récipient,
- le fond du récipient est incliné à partir des côtés longitudinaux en direction du milieu, de telle manière qu'il forme une rigole en direction de l'ouverture de prélèvement, et
- le fond est incliné à partir du côté frontal situé à l'opposé de l'ouverture de prélèvement vers le côté frontal comportant l'ouverture de prélèvement,
et le joint de fermeture du sac est adapté à la forme rigide périphérique du récipient.

2. Système de récipient selon la revendication 1, dans lequel les deux raccords du sac correspondent à deux ouvertures du récipient.

3. Système de récipient selon l'une quelconque des revendications précédentes, dans lequel le récipient présente dans la région inférieure l'ouverture de prélèvement, qui est couplée au premier raccord du sac, et dans lequel le deuxième raccord du sac est raccordé par une conduite de raccordement à une ouverture de remplissage du récipient, dans lequel le deuxième raccord du sac se trouvant dans le récipient est situé au-dessus de l'ouverture de prélèvement du récipient au moins lorsque le sac est entièrement rempli.

4. Système de récipient selon la revendication 3, dans lequel la conduite de raccordement allant de l'ouverture de remplissage du récipient au deuxième raccord du sac est réalisée entièrement ou partiellement sous forme flexible.

5. Système de récipient selon la revendication 4, dans lequel la conduite de raccordement est guidée à partir de l'ouverture de remplissage sous le fond incliné du récipient et ensuite vers le haut derrière le sac jusqu'au deuxième raccord dans la région supérieure du sac.

6. Système de récipient selon la revendication 4 ou 5, dans lequel la conduite de raccordement est rigide à l'intérieur du récipient jusque dans la partie supérieure du récipient et est flexible à partir de là jusqu'au deuxième raccord du sac.

7. Dispositif destiné au dosage d'un milieu liquide, comprenant un circuit pour le milieu liquide avec un système de récipient intégré dans le circuit et une zone de dosage partant du circuit, dans lequel le système de récipient comprend un récipient de forme stable et un sac flexible disposé dans le récipient et qui présente deux raccords qui correspondent à au moins une ouverture du récipient, dans lequel
- le récipient présente une forme de base extérieure essentiellement parallélépipédique,
- l'ouverture de prélèvement est disposée dans un côté frontal du récipient,
- le fond du récipient est incliné à partir des côtés longitudinaux en direction du milieu, de telle manière qu'il forme une rigole en direction de l'ouverture de prélèvement, et
- le fond est incliné à partir du côté frontal situé à l'opposé de l'ouverture de prélèvement vers le côté frontal comportant l'ouverture de prélèvement.

8. Dispositif selon la revendication 7, dans lequel la quantité du milieu liquide, que l'on dose, est réglable au moyen du temps pendant lequel une soupape est ouverte et/ou un dispositif d'alimentation est activé.

9. Dispositif selon la revendication 7 ou 8, dans lequel la zone de dosage comprend un dispositif de prélèvement, qui comporte une soupape à fermeture automatique, dans lequel la soupape à fermeture automatique comprend:
- un cylindre,
- un couvercle, qui ferme le cylindre sur un côté ouvert,
- une buse de dosage, qui est ajustée dans un côté ouvert du cylindre situé à l'opposé du couvercle,
- un premier raccord disposé dans la paroi du cylindre immédiatement au-dessus de la buse de dosage,
- une aiguille de fermeture munie d'un joint d'étanchéité périphérique, qui peut être guidée verticalement dans la buse de dosage,
- une tige de traction, au moyen de laquelle l'aiguille de fermeture peut être déplacée en direction verticale, et
- un piston à ressort étanche par rapport à la paroi intérieure du cylindre, auquel l'aiguille de fermeture est fixée au moyen de la tige de traction, de telle manière que l'aiguille de fermeture avec le joint d'étanchéité ferme l'ouverture de la buse de façon étanche à l'air par rapport à l'ambiance, lorsque le piston se trouve dans une position terminale inférieure,
- dans lequel la soupape est ouverte au moyen du milieu liquide à doser, lorsque la pression du milieu liquide à doser qui arrive est suffisamment élevée pour vaincre la force du ressort du piston à ressort.

10. Dispositif selon la revendication 9, dans lequel la soupape à fermeture automatique comporte en outre un deuxième raccord, qui est disposé en face du premier raccord et immédiatement au-dessus de la buse de dosage, afin de pouvoir doser un deuxième milieu liquide en alternance ou en complément au milieu liquide à doser.

11. Dispositif selon la revendication 10 avec une unité de rinçage, qui comprend une soupape et/ou une unité d'alimentation pour un moyen de dissolution et/ou de nettoyage ainsi qu'un récipient pour le moyen de dissolution et/ou de nettoyage, dans lequel le moyen de dissolution et/ou de nettoyage arrive, à partir du récipient via l'unité d'alimentation et/ou la soupape, dans la soupape de dosage faisant partie de la zone de dosage.

12. Procédé pour mélanger une formulation de couleur, dans lequel
- on choisit un échantillon de couleur,
- en fonction de l'échantillon de couleur choisi, on ajoute des compositions de colorant, au moyen de plusieurs dispositifs selon l'une quelconque des revendications 7 à 11, à une formulation de base dans un récipient approprié, et
- on prépare ensuite la formulation de couleur dans le récipient sous la forme d'un produit fini.
